(19) Europäisches Patentamt
European Patent Office
Office européen des brevets

(11) **EP 1 025 539 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(51) Int Cl.[7]: **G06K 9/68**

(21) Anmeldenummer: **98965641.8**

(86) Internationale Anmeldenummer:
**PCT/EP98/06791**

(22) Anmeldetag: **26.10.1998**

(87) Internationale Veröffentlichungsnummer:
**WO 99/23603 (14.05.1999 Gazette 1999/19)**

(54) **FRAKTAL DARWINISTISCHE OBJEKTERZEUGUNG**

FRACTAL DARWINIAN PRODUCTION OF OBJECTS

PRODUCTION D'OBJETS FRACTALE DARWINIENNE

(84) Benannte Vertragsstaaten:
**DE ES FR GB IT**

(30) Priorität: **24.10.1997 DE 19747161**

(43) Veröffentlichungstag der Anmeldung:
**09.08.2000 Patentblatt 2000/32**

(73) Patentinhaber: **Definiens AG.**
**80331 München (DE)**

(72) Erfinder:
• **BINNIG, Gerd**
**CH-8832 Wollerau (CH)**
• **SCHMIDT, Günter**
**D-82008 Unterhaching (DE)**
• **BAATZ, Martin**
**D-80799 München (DE)**
• **VOSS, Richard, F.**
**Ocean Ridge, FL 33435 (US)**
• **ESCHENBACHER, Peter**
**D-91077 Neunkirchen (DE)**

(74) Vertreter: **Winter, Brandl, Fürniss, Hübner, Röss, Kaiser, Polte Partnerschaft**
**Patent- und Rechtsanwaltskanzlei**
**Alois-Steinecker-Strasse 22**
**85354 Freising (DE)**

(56) Entgegenhaltungen:
• **AZENCOTT R ET AL: "ROBUST RECOGNITION OF BUILDINGS IN COMPRESSED LARGE AERIAL SCENES" PROCEEDINGS OF THE INTERNATIONAL CONFERENCE ON IMAGE PROCESSING (IC, LAUSANNE, SEPT. 16 - 19, 1996, Bd. 2, 16. September 1996, Seiten 617-620, XP000733312 INSTITUTE OF ELECTRICAL AND ELECTRONICS ENGINEERS**
• **FISCHER V ET AL: "A parallel any-time control algorithm for image understanding" PROCEEDINGS OF THE 13TH INTERNATIONAL CONFERENCE ON PATTERN RECOGNITION, PROCEEDINGS OF 13TH INTERNATIONAL CONFERENCE ON PATTERN RECOGNITION, VIENNA, AUSTRIA, 25-29 AUG. 1996, Seiten 141-145 vol.1, XP002101878 ISBN 0-8186-7282-X, 1996, Los Alamitos, CA, USA, IEEE Comput. Soc. Press, USA**

**Beschreibung**

Die vorliegende Erfindung bezieht sich auf ein Verfahren zur fraktal darwinistischen Objekterzeugung und insbesondere auf ein Verfahren, bei dem zu untersuchende Objekte bzw. Strukturen in komplexen Zusammenhängen erfaßt und entsprechende Objekte bzw. Strukturen erzeugt werden. Hierbei können sowohl das Gesamtverfahren als auch die Objekte und ihre Verknüpfungen als fraktal darwinistisch angesehen werden.

Darwinistische Verfahren bzw. genetische oder evolutionäre Verfahren werden dann angewendet, wenn die Anzahl der Möglichkeiten zu groß ist, um alle zu berechnen. In dem hier beschriebenen Verfahren werden solche genetischen oder evolutionären Optimierungsverfahren mit "mehrskaliger", fraktaler Vorgehensweise kombiniert. Es wird also auf dynamische Weise berücksichtigt, wie das "Kleine" mit dem "Großen" zusammenhängt. Der Begriff fraktal ist aus der fraktalen Geometrie von Mandelbrot entlehnt, bedeutet nachfolgend jedoch etwas anderes. Bei Mandelbrot sieht ein Unterobjekt oder eine Unterstruktur dem Objekt oder der Struktur, zu dem oder der es gehört, ähnlich: Also der Ast sieht dem Baum ähnlich. In dem nachfolgend beschriebenen Verfahren können die Objekte ihren Unterobjekten ähnlich sehen, tun dies aber in der Regel nicht. Vielmehr ist die Behandlung und Beschreibung der Objekte ähnlich für Unterobjekte und Objekte.

Eine derartige fraktal darwinistische Objekterzeugung wird insbesondere für die Bilderkennung bzw. Bilderzeugung verwendet, kann jedoch auch für die Spracherkennung bzw. Spracherzeugung und generell für die Erkennung und Erzeugung von Strukturen aller Art eingesetzt werden, die eine besonders komplexe Gesamtstruktur aufweisen.

Herkömmliche Bilderkennungsverfahren basieren beispielsweise auf einem direkten Vergleich zwischen einer zu untersuchenden Struktur (z.B. Bild oder ein Objekt im Bild) und einer bereits abgespeicherten Struktur, die mit der zu untersuchenden Struktur unmittelbar verglichen wird. Nachteilig ist bei derartigen Bilderkennungssystemen jedoch die Tatsache, daß aufgrund des direkten Vergleichs zum einen die Struktur auch tatsächlich in einer sehr ähnlichen Form vorliegen muß bzw. alle möglichen Abwandlungen und Verzerrungen ebenfalls ausprobiert werden müssen und zum anderen die Objekte oft nicht eindeutig aufgrund ihrer Eigenschaften, sondern teilweise oder im Extrem sogar vorwiegend über ihren Kontext, also die nähere oder fernere Umgebung, erkannt werden können. Darüber hinaus ist die Genauigkeit und Zuverlässigkeit der Bilderkennung bzw. Bilderzeugung begrenzt, da ein außerordentlich großer Speicherplatzbedarf für die Vergleichsstrukturen benötigt wird.

Aus Fischer V. et al.: "A Parallel Any-Time Control Algorithm for Image Understanding", PROCEEDINGS OF THE 13TH INTERNATIONAL CONFERENCE ON PATTERN RECOGNITION, VIENNA, AUSTRIA, 25 bis 29. August 1996, Seiten 141 bis 145, Bd. 1, XP002 101878, ISBN 0-8186-7282-X, 1996, Los Alamitos, CA, USA, IEEE Comput. Soc. Press, USA, ist ein Bilderkennungsverfahren bekannt, bei dem genetische Algorithmen verwendet werden. Ein Modell eines Bilds beruht auf einem semantischen Netzwerk. Bei diesem Netzwerk sind Beziehungen zwischen Bildobjekten vorhanden.

Der Erfindung liegt daher die Aufgabe zugrunde, ein Verfahren zur fraktal darwinistischen Objekterzeugung zu schaffen, mit dem zu untersuchende Objekte in einem komplexen Zusammenhang bzw. mit einer zu untersuchenden komplexen Struktur mit hoher Genauigkeit und Zuverlässigkeit erkannt und nachgebildet werden können.

Diese Aufgabe wird erfindungsgemäß mit den im Anspruch 1 angegebenen Maßnahmen gelöst.

Hierbei wird eine fraktale hierarchische Objektbibliothek mit darin abgelegten vorbestimmten Objekten verwendet, die dazugehörige Eigenschafts-, Kontext- und Abwandlungsregeln aufweisen. Die Eigenschaftsregeln beschreiben das Objekt, die Kontextregeln die Beziehungen zwischen den Objekten (hierarchische und nichthierarchische Beziehungen), und die Abwandlungsregeln die Veränderung der Objekte aufgrund ihrer Eigenschaften und/oder Beziehungen. Zunächst werden mit relativ formalen Algorithmen Grundobjekte mit unterund übergeordneten Objekten hierarchisch ausgebildet bzw. aus der zu untersuchenden komplexen Struktur hierarchische Grundstrukturen erzeugt. Diese Grundobjekte werden anschließend mit den Objekten der fraktalen Objektbibliothek verglichen, wobei jedem Grundobjekt mittels der Eigenschaftsregel des entsprechenden Objekts in der Objektbibliothek eine lokale Klassifikationswahrscheinlichkeit zugeordnet wird. Anschließend werden auf die jeweiligen Objekte weitere Kontextregeln angewendet, wodurch sich globale bzw. fraktale Klassifikationswahrscheinlichkeiten ergeben. Abschließend werden in Abhängigkeit von Abwandlungsregeln die fraktalen Klassifikationswahrscheinlichkeiten der Grundobjekte optimiert. Dieses Verfahren wird zum Verbessern der Klassifikationswahrscheinlichkeiten wiederholt durchgeführt.

Insbesondere kann beim Schritt zum Ausbilden der Grundobjekte eine Verfahren zur iterativen Segmentierung von Basiselementen unter Berücksichtigung von relativ formalen Homogenitätskriterien (z.B. ähnliche Farbe, Farbschwankung usw.) verwendet werden, wodurch sich eine besonders schnelle Objekterzeugung ergibt.

Ferner kann die fraktale Objekt-Bibliothek Abwandlungsregeln aufweisen, die vorschriften für eine Abwandlung - mit Abwandlung ist hier eine Veränderung, z.B. die Ausbreitung des Musters oder Objekts, gemeint (z.B. durch mehr oder weniger gezielte Formveränderung) - oder eine Zerkleinerung eines Objekts beinhalten, wobei die Erzeugung der unter- und übergeordneten Objekte in Abhängigkeit von den Wachstumsregeln und dem Betrag der jeweiligen Klassifikationswahrscheinlichkeit erfolgt.

Vorzugsweise werden Objekte durch Fusionieren oder Gründen erzeugt, wobei sich entweder die Unterstruktur auflöst oder beibehalten wird. Die Erzeugung von untergeordneten Objekten aus Grundobjekten bzw. übergeordneten Objekten erfolgt durch Zerkleinerung bzw. mittels bekannter Segmentierverfahren.

Vorzugsweise können unbekannte und immer wiederkehrende Objekte, die beispielsweise bei der Segmentierung gewonnen wurden, jedoch kein entsprechendes Objekt in der fraktalen Objekt-Bibliothek besitzen, mit dazugehörigen Eigenschafts-, Kontext- und/oder Abwandlungsregeln in die fraktale Objekt-Bibliothek aufgenommen werden. Dadurch ist der sogenannte "Erfahrungsschatz" für das Verfahren beliebig erweiterbar.

Die in der Objekt-Bibliothek zu einem bestimmten Objekt gehörigen Eigenschaftsregeln legen die Eigenschaften eines bestimmten Objekts fest. Für den Fall der Bilderkennung bzw. Bilderzeugung bestimmen beispielsweise die Form, die Dichte und/oder die Farbe eines bestimmten Objekts seine Eigenschaften. Bei der Spracherkennung bzw. Spracherzeugung können diese Eigenschaften auch in Form von Tonhöhe, Klang, Rhythmus usw. festgelegt werden. Die Kontextregeln können aus inneren und äußeren Kontextregeln bestehen, wobei die inneren Kontextregeln eine Beziehung zwischen gleichwertigen Objekten innerhalb einer gleichen Hierarchie festlegen. Die Objekte können hierbei sowohl aus einem gemeinsamen übergeordneten Objekt als auch aus voneinander verschiedenen übergeordneten Objekten stammen. Die externen Kontextregeln legen üblicherweise eine Beziehung zwischen den unter- und übergeordneten Objekten fest. Bei Verwendung von mehreren hierarchischen Objektstrukturen zueinander können die externen Kontextregeln aber auch eine Beziehung von Objekten innerhalb der parallel existierenden hierarchischen Objektstrukturen festlegen.

Vorzugsweise wird das wiederholte Durchführen der Verfahrensschritte dann abgeschlossen, wenn die Klassifikationswahrscheinlichkeit für das gesamte zu untersuchende Objekt einen bestimmten Schwellwert überschritten hat. Alternativ kann das wiederholte Durchführen des Verfahrens auch dann abgeschlossen werden, wenn ein im wesentlichen stabiles Gesamtobjekt erzeugt worden ist.

Weitere vorteilhafte Ausgestallungen der vorliegenden Erfindung sind gegenstand der abhängigen Ansprüche.

Die Erfindung wird nachstehend anhand von Ausführungsbeispielen unter Bezugnahme auf die Zeichnung näher beschrieben. Es zeigen:

Fig. 1 eine schematische Darstellung -eines zu untersuchenden komplexen Bilds, mit der das erfindungsgemäße Verfahren hinsichtlich einer Bilderzeugung beschrieben wird, und

Fig. 2 eine schematische Darstellung einer Satellitenaufnahme, mittels der die Korrekturmöglichkeit des erfindungsgemäßen Verfahrens erläutert wird.

Zunächst werden auf allgemeine Weise die grundsätzlichen Überlegungen diskutiert, auf denen die vorliegende Erfindung beruht.

Hierbei werden nachfolgend ausschließlich zweidimensionale Bilder berücksichtigt, die als zu untersuchende komplexe Struktur bzw. als Objekte mit komplexem Zusammenhang betrachtet werden. Derartige zu untersuchende Strukturen können jedoch auch in Sprache, in bewegten Bildern oder in Texten befindliche Sinngehalte sein.

Beim Betrachten beispielsweise eines Bilds wird ein menschlicher Beobachter, wenn ihm das Thema vertraut ist, sehr bald Objekte erkennen können. Wie der Mensch dies im einzelnen bewerkstelligt, hängt mit seiner Lebenserfahrung zusammen, ist jedoch in der vollen Tiefe noch nicht verstanden. Ein von einem Computer segmentiertes Bild, d.h. ein in einzelne Objektsegmente aufgeteiltes Bild, wird in der Regel Objekte erzeugen, die mit den gewünschten Objekten, wie sie vom Menschen erkannt werden, nicht allzuviel gemeinsam haben.

In dem nachfolgend beschriebenen Verfahren wird die Erkennung und Erzeugung beispielsweise eines Bilds als ein mehrskaliger bzw. fraktaler und evolutionärer bzw. darwinistischer Vorgang verstanden. Die einzelnen Objekte eines Bilds werden hierbei als eine Art von eigenständigem "Lebewesen" behandelt, die zu Beginn des Verfahrens sehr vage, formell und unrealistisch sind, sich aber bei wiederholter Durchführung des Verfahrens dahingehend verändern und konkreter werden, daß sie sich immer besser an eine Bibliothek von bekannten Objekten anpassen, die sozusagen den Erfahrungsschatz des Computers bilden.

Hierbei sind die Objekte hierarchisch strukturiert. Große bzw. übergeordnete Objekte werden somit in Unterobjekte bzw. untergeordnete Objekte zerlegt bzw. zerschlagen, während kleine bzw. untergeordnete Objekte zu großen bzw. übergeordneten Objekten zusammengefaßt werden. Das Verfahren zur Anpassung der Objekte an die Objekt-Bibliothek findet somit auf mehreren Ebenen (Skalen) statt. Für diese Anpassung sind beim Vergleich mit der Objekt-Bibliothek zum einen Eigenschaftsregeln für die Objekte und andererseits Kontextregeln zwischen den Objekten sowie hierarchische Strukturen von Bedeutung.

Für die optimale Anpassung aller Objekte und Strukturen zur Erzeugung der sinnvollsten Lösung werden evolutionäre Algorithmen verwendet. Dabei wird unter anderem auf die allgemeinen darwinistischen Mechanismen zurückgegriffen, die im folgenden kurz beschrieben sind:

Isolation, Attraktion

Gemäß der vorliegenden Erfindung ist unter Isolation die Abgrenzung von Teilbereichen beispielsweise eines zu untersuchenden Bilds zu Objekten zu verstehen. Dies kann durch Zerlegung bzw. Zerschlagen oder Segmentierung nach bestimmten Algorithmen geschehen. Vorzugsweise wird für die Segmentierung ein Verfahren verwendet, bei dem unter Berücksichtigung von Homogenitätskriterien die Ähnlichkeit bzw. Zugehörigkeit zwischen Bildelementen und Bildsegmenten bestimmt wird. Umgekehrt können auch die kleinen Objekte bzw. untergeordneten Objekte zu großen bzw. übergeordneten Objekten zusammengefaßt werden. In diesem Fall entspricht das Begrenzen dieser Gruppierung auf eine bestimmte Anzahl von Gruppenmitgliedern der Isolation. Beispielsweise kann eine hierarchische Objektstruktur weitgehend vorwissensfrei erzeugt werden und damit zu einer hierarchischen Abstraktion eines beliebigen vorgegebenen Datensatzes durch Zusammenlegen kleinerer Objekte zu größeren Objekten führen, sofern die Anwendung eines Homogenitätskriteriums zu einem Wert führt, der unterhalb eines Schwellenwerts liegt. Als Homogenitätskriterium kann beispielsweise die Differenz der mit der Größe gewichteten Heterogenität h eines durch Fusion oder Gründung neu entstandenen Objekts und der Summe der mit der jeweiligen Größe $n_1$ bzw. $n_2$ gewichteten Heterogenitäten der ursprünglichen Objekte $h_1$ bzw. $h_2$ herangezogen werden. Die Differenz $\Delta h_{gew}$ der gewichteten Heterogenität nachher zu vorher, das heißt die bei Zusammenlegen von zwei Objekten eingetragene Heterogenität, ergibt sich aus der Gleichung

$$\Delta h_{gew} = (n_1 + n_2)h_{neu} - (n_1 h_1 + n_2 h_2),$$

wobei diese Differenz möglichst klein sein soll.

Insbesondere werden von allen potentiell zu einer Fusion oder Gründung in Frage kommenden Objektpaarungen immer diejenigen zuerst zusammengelegt, bei denen die durch die Fusion oder Gründung eingetragene Differenz der gewichteten Heterogenität am geringsten ist. Unterschreitet die Differenz der gewichteten Heterogenität geteilt durch die Gesamtgröße ($\Delta h_{gew} ./. (n_1 + n_2)$) einen bestimmten vorgegebenen Schwellenwert, dann werden Objekte bei der Zusammenlegung fusioniert. Andererseits wird ein neues übergeordnetes Objekt unter Beibehaltung, das ließt Ablegen in der Objekt-Bibliothek, der kleineren Objekte gegründet, das heißt Gründung eines neuen übergeordneten Objekts, wenn diese Differenz der gewichteten Heterogenität geteilt durch die Gesamtgröße oberhalb eines vorbestimmten Schwellenwerts liegt. Ein zwischen zwei Objekten potentiell austauschbares untergeordnetes Objekt wird immer dann tatsächlich umgelagert, wenn durch diesen Austausch bzw. diese Umlagerung die gewichtete Heterogenität beider Objekte gemäß der Gleichung

$$h_{gew\ nachher} < h_{gew\ vorher} \Rightarrow$$

$$n_{1nachher}h_{1nachher} + n_{2nachher}h_{2nachher} < n_{1vorher}h_{1vorher} + n_{2vorher}h_{2vorher}$$

verringert wird.

Somit wird eine hierarchische Objektstruktur aus Grundobjekten durch Gründungen, Zerschlagen, Fusion, Auflösung, Unterordnung, Ausgruppierung und Umgruppierung von Objekten erzeugt. Hierbei steht eine Gründung, bei der übergeordnete Objekte erzeugt werden, einem Zerschlagen zum Erzeugen von untergeordneten Objekten gegenüber. Die Fusion zum Erzeugen von größeren Objekten aus einer Vielzahl von kleinen Objekten steht der Auflösung zum Erzeugen von kleineren Objekten aus einem großen Objekt gegenüber. Bei der Unterordnung werden Objekte eingefangen und einem übergeordneten Objekt untergeordnet. Demgegenüber wird bei der Ausgruppierung ein untergeordnetes Objekt aus einem übergeordneten Objekt ausgestoßen. Bei der Umgruppierung erfolgt ein Austausch von untergeordneten Objekten.

Die jeweiligen Objekte können mit anderen Gruppenmitgliedern in speziellen Beziehungen stehen. Diese Beziehungen bzw. Kontextregeln werden auch als Attraktion bezeichnet. In statischen Bildern kann sich die Attraktion bzw. die Beziehung in bestimmten Mustern mit charakteristischen relativen Abständen, Größenverhältnissen oder Winkeln äußern. Darüber hinaus werden jedem Objekt vorbestimmte Eigenschaften zugewiesen, die beispielsweise ihre geometrische Form im n-dimensionalen Raum in verdichteter Weise, die Farbverteilung usw. widerspiegeln.

Abwandlungen

Welche Bereiche eines komplexen Gebildes sinnvollerweise als Objekt bezeichnet werden sollen, ist oft, wie bereits erwähnt, in einem ersten Durchgang des Verfahrens nicht eindeutig definierbar. Deshalb geschieht das Zerlegen bzw. das Zusammensetzen zu Objekten aus diesen Bereichen auf iterative Weise. Objekte werden demnach zuerst vorläufig erstellt und später iterativ immer gezielter abgewandelt. Eine Veränderung von Objekten erfolgt dadurch, daß Bereiche aus ihnen, beispielsweise untergeordnete Objekte, ausgegrenzt oder umliegende Bereich, beispielsweise benachbarte Objekte, eingegliedert werden. Eine andere Art der Abwandlung ist die Veränderung der Attraktionen bzw. Kontextregeln.

Eine lokale Abwandlung eines Objekts könnte man als Mutation ansehen. Da es aber verschiedene Möglichkeiten von Abwandlungen aus der lokalen Abwandlung gibt, wird der allgemeine Begriff Abwandlung verwendet.

Auslese, Fitness

Beim Abwandeln der jeweiligen Objekte soll ihre "Fitness" bzw. "Klassifikationswahrscheinlichkeit" bezüglich der Objekt-Bibliothek optimiert werden. Als Maß ihrer Fitness bzw. Klassifiationswahrscheinlichkeit gilt die Ähnlichkeit ihrer gebündelten Eigenschaften mit den Eigenschaften von Objekten der vorbereiteten Objekt-Bibliothek. In der Objekt-Bibliothek sind eine Vielzahl möglicher Objekte mit Ihren möglichen Eigenschaften bzw. Eigenschaftsregeln abgelegt, also deutlich mehr Objekte als im gerade zu untersuchenden Objekt (z.B. Bild).

Zusätzlich können mögliche Beziehungen bzw. Kontextregeln der Objekte zueinander, also ihre Attraktion, in der Objekt-Bibliothek beschrieben sein. Die im Bild gefundenen Objekte bzw. Strukturen besitzen dann ebenfalls eine mehr oder weniger große Ähnlichkeit also Klassifikationswahrscheinlichkeit zu den möglichen Attraktionen bzw. Kontextregeln der entsprechenden Objekte in der Objekt-Bibliothek.

Vielfalt, Mating

Als Langzeitgedächtnis kann ferner die Vielfalt von Objekten und Objektstrukturen eingesetzt werden. Dies bedeutet, daß nicht nur die absolut beste (höchste Klassifikationswahrscheinlichkeit) dieser Objekte bzw. Strukturen überlebt bzw. weiter verwendet wird, sondern auch weniger gute Objekte (geringere Klassifikationswahrscheinlichkeit). Dadurch gehen einmal gefundene, jedoch im Moment zweitklassige Möglichkeiten nicht gleich verloren. Diese Vielfalt repräsentiert ein Gedächtnis für Zweit- oder Drittklassiges. Dies macht Sinn, da das im Moment Zweitklassige in einer späteren Entwicklungsphase überlegen sein kann. Die Vielfalt der Lösungsmöglichkeiten macht zudem neben der Mutation eine andere Art von Abwandlung möglich. Diese weitere Art von Abwandlung wird als "Mating" oder Mischen und Kombinieren von unterschiedlichen Lösungsstrukturen bezeichnet.

Reproduktion

In der Natur wird durch Reproduktion eines "erfolgreichen" Lebewesens die Anzahl dieser Art von Lebewesen vergrößert. Dadurch wird die Bedeutung des speziellen genetischen Codes erhöht, da er nun parallel an zwei Orten wirken kann. Etwas entsprechendes macht auf den ersten Blick für die Objekte bei der Objekterzeugung mit einem sequentiell arbeitenden Computer keinen Sinn. Bei einem dynamischen System kann dies jedoch auf den zweiten Blick durchaus nützlich sein, selbst wenn es sich um ein und denselben Lösungsansatz bzw. das gleiche Objekt handelt. In einem dynamischen System verändert sich die Umgebung der Objekte. Deshalb wird bei der Objekterkennung bzw. -erzeugung die Bedeutung eines Objekts dadurch erhöht, daß das Objekt öfters behandelt und somit die Anzahl virtuell erhöht wird. Sind die reproduzierten Objekte darüber hinaus abgewandelt, so ist es oft sinnvoll nur ein Objekt plus die unterschiedlichen Abwandlungen abzuspeichern.

Löschen

Damit durch die Reproduktion die Anzahl von Lösungsmöglichkeiten nicht zu stark anwächst und damit den Optimierungsprozeß unnötig verlangsamt, müssen manche der Lösungsmöglichkeiten gelöscht werden.

Da die darwinistischen Algorithmen zum Teil sehr spezifisch sind, ist es nicht wünschenswert, alle möglichen Arten von Algorithmen gleichzeitig für das gesamte zu untersuchende Bild anzuwenden. Es ist vielmehr sinnvoll, zu Beginn des Verfahrens bzw. der "Evolution" mit sehr allgemeinen formalen Algorithmen zu beginnen. Durch Vergleich mit der Objekt-Bibliothek wird hierbei ein erster Erkenntnisstand erreicht, der dazu benutzt werden kann, gezieltere Algorithmen bzw. Abwandlungsregeln einzusetzen. Dadurch kann die Klassifikationswahrscheinlichkeit bzw. die Fitness möglicherweise erhöht werden. Vorzugsweise können noch gezielter Algorithmen zum Einsatz kommen, wodurch sich immer ausgefeiltere Objekte mit individueller Bedeutung und mit immer höherer Fitness bzw. Klassifikationswahrscheinlichkeit ergeben.

Nachfolgend wird auf die Besonderheit der Mehrskaligkeit des erfindungsgemäßen Verfahrens im einzelnen eingegangen, die für die Analyse komplexer Strukturen eine wichtige Rolle spielt.

Die Ähnlichkeit eines Objekts des zu untersuchenden Gegenstands bzw. des Bilds mit dem eines Objekts der Objekt-Bibliothek entspricht einer lokalen Fitness bzw. lokalen Klassifikationswahrscheinlichkeit. Diese lokale Klassifikationswahrscheinlichkeit reicht jedoch allein nicht aus, da auch bei Objekten mit bereits sehr hoher Fitness bzw. Klassifikationswahrscheinlichkeit weiterhin Mehrdeutigkeit vorliegen kann, also eine ähnlich hohe lokale Fitness bzw. Klassifikationswahrscheinlichkeit zu mehreren Objekten der Objekt-Bibliothek besteht. Oft wird dann über die Kontextregeln oder die Struktur der untergeordneten Objekte des jeweiligen Objekts seine Bedeutung erst klar erkennbar.

Mehrskalige, d.h. fraktale Betrachtungsweisen sind deshalb unverzichtbar. Die fraktale Behandlung einer zu untersuchenden Struktur, beispielsweise eines Bilds, erfordert somit eine fraktale hierarchische Objekt-Bibliothek, eine fraktale Fitness bzw. Klassifikationswahrscheinlichkeit, eine fraktale Abwandlung und eventuell eine fraktale Reproduktion und ein fraktales Löschen. Die fraktale Objekt-Bibliothek ist eine Bibliothek, in der nicht nur die Eigenschaften bzw. Eigenschaftsregeln von Objekten, sondern auch deren mögliche inneren sowie äußeren Beziehungen (innere und äußere Kontextregeln) sowie die Abwandlungsregeln abgespeichert sind. Dies bedeutet, daß in der fraktalen Objekt-Bibliothek ebenso abgespeichert ist, aus welchen möglichen untergeordneten Objekten das Objekt bestehen kann, einschließlich der möglichen Beziehungen dieser untergeordneten Objekte, und in welchen Beziehungen bzw. Kontexten sich das Objekt zu übergeordneten Objekten befinden kann. Hierbei handelt es sich also auch um hierarchische Information, da das Objekt in der Regel in größere Zusammenhänge eingebettet ist und aus untergeordneten Objekten mit deren speziellen Beziehungen aufgebaut ist. Aus dieser hierarchischen Struktur kann durch Vergleich mit den hierarchischen Strukturen in der Bibliothek eine hierarchische oder fraktale Fitness bzw. Klassifikationswahrscheinlichkeit ermittelt werden.

Ausgehend von der lokalen Fitness bzw. Klassifikationswahrscheinlichkeit, die sich aus dem unmittelbaren Vergleich des Objekts mit den Objekten der Objekt-Bibliothek ergibt, wird aufbauend auf dieser lokalen Fitness eine fraktale Fitness bzw. Klassifikationswahrscheinlichkeit errechnet, die sich aus der lokalen und der hierarchischen Fitness zusammensetzt. Über die Abwandlung werden diese fraktalen Klassifikationswahrscheinlichkeiten optimiert.

Nachfolgend werden die vorstehend beschriebenen allgemein gültigen Regeln auf bevorzugte Ausführungsbeispiele angewendet.

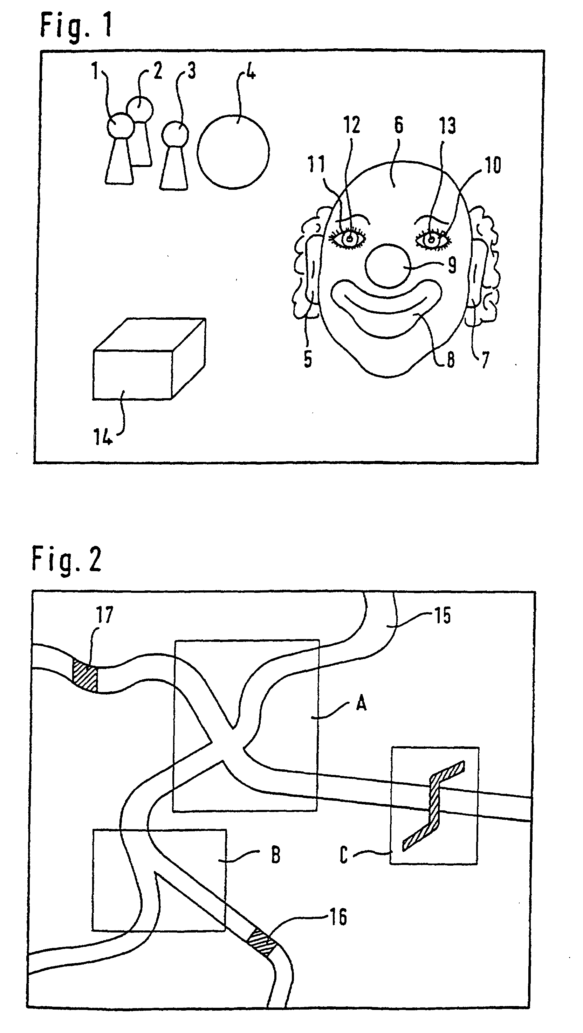

Die Figur 1 zeigt eine schematische Darstellung eines zu untersuchenden komplexen Bilds, das im wesentlichen einem fraktal erzeugten Gesamtobjekt entspricht.

Die Bezugszeichen 1, 2 und 3 bezeichnen hierbei Spielkegel, während das Bezugszeichen 4 einen Ball darstellt. In der hierarchischen Struktur des erfindungsgemäßen Verfahrens könnten die Kegel und der Ball zum Oberbegriff bzw. übergeordneten Objekt "Spielzeug" zusammengefaßt werden. Die Bezugszeichen 5 und 7 bezeichnen die Ohren eines Clowns. Die Bezugszeichen 8 und 9 bezeichnen Mund bzw. Nase des Clowns. Die Augen werden mit den Bezugszeichen 10 und 11 bezeichnet, während die Pupillen mit den Bezugszeichen 12 und 13 bezeichnet werden. Alle vorstehend beschriebenen Objekte sind in einer vorbereiteten fraktalen Objekt-Bibliothek abgelegt und demzufolge wieder erkennbar. Das Bezugszeichen 14 bezeichnet einen quaderförmigen Körper der in der fraktalen Objekt-Bibliothek noch nicht existiert.

Die fraktale hierarchische Objekt-Bibliothek besitzt neben den vorstehend beschriebenen Objekten auch dazugehörige Eigenschafts-, Kontext- und Abwandlungsregeln, die die Eigenschaften der jeweiligen Objekte, die Beziehungen untereinander bzw. zu untergeordneten und übergeordneten Objekten und die möglichen Abwandlungen des Objekts festlegen. In der fraktalen Objekt-Bibliothek könnten beispielsweise die Objekte 5 bis 13, d.h., Ohren, Kopf, Mund, Nase, Augen und Pupillen zum übergeordneten Objekt "Clowngesicht" zusammengefaßt werden, das sich wiederum in einer bestimmten Beziehung bzw. Kontext zum übergeordneten Objekt "Spielzeug" befinden kann. Eine derartig aufgebaute fraktale hierarchische Objekt-Bibliothek besteht somit aus einer Vielzahl von hierarchisch angeordneten Objekten mit dazugehörigen Eigenschaftsregeln, Kontextregeln und Abwandlungsregeln.

Als erstes werden in der zu untersuchenden Struktur bzw. dem Bild Grundobjekte ausgebildet. Diese Grundobjekte entsprechen in diesem ersten erfindungsgemäßen Ausführungsbeispiel den Objekten 1 bis 14. Die Ausbildung dieser Grundobjekte kann beispielsweise durch ein iteratives Segmentieren von Basiselementen (Pixeln bzw. Bildpunkten) unter Berücksichtigung von Homogenitätskriterien erfolgen. Es kann jedoch auch ein anderes im Kapitel "Isolation" beschriebenes Verfahren verwendet werden. Alternativ kann jedoch bereits das Ausbilden dieser Grundobjekte unter Berücksichtigung der fraktalen Objekt-Bibliothek erfolgen, wobei beispielsweise eine vorbestimmte Farbe einem ganz bestimmten Objekt mit sehr hoher Fitness bzw. Klassifikationswahrscheinlichkeit zugeordnet wird.

Im Normalfall wird jedoch aus Zeitgründen zunächst eine iterative Segmentierung durchgeführt und anschließend die derart erhaltene hierarchische Grundstruktur samt Grundobjekten mit den Objekten der fraktalen hierarchischen Objekt-Bibliothek verglichen. Wird hierbei das Grundobjekt nicht in der Objekt-Bibliothek gefunden, so wird es als unbekannt eingestuft, wie es beim Objekt 14 der Fall ist. Die in der fraktalen hierarchischen Objekt-Bibliothek bekannten Objekte 1 bis 13 werden hingegen klassifiziert und mit einer lokalen Fitness bzw. lokalen Klassifikationswahrscheinlichkeit entsprechend der Übereinstimmung ihrer Eigenschaften mit den Eigenschaften der Objekt-Bibliothek ausgestattet. Die nachfolgende Tabelle zeigt eine beispielhafte Klassifizierung der Objekte gemäß Figur 1.

Tabelle I:

| Gegenstand | Objekt | lokale Fitness (Eigenschaftsregel) | fraktale Fitness (Kontextregel) |
|---|---|---|---|
| Kegel | 1 | 20% | 30% |
| Kegel | 2 | 5% | 25% |
| Kegel | 3 | 40% | 35% |
| Ball | 4 | 80% | 70% |
| Ohren | 5 | 40% | 45% |
| Ohren | 7 | 45% | 50% |
| Kopf | 6 | 30% | 40% |
| Mund | 8 | 25% | 38% |
| Nase | 9 | 35% | 45% |
| Augen | 10 | 75% | 85% |
| Augen | 11 | 74% | 85% |
| Pupillen | 12 | 50% | 65% |
| Pupillen | 13 | 52% | 65% |
| unbekannt | 14 | 0% | 0% |

In der vorstehend beschriebenen Tabelle I sind die einzelnen Gegenstände bzw. Objekte mit ihren jeweiligen lokalen und fraktalen Klassifikationswahrscheinlichkeiten bzw. Fitnesswerten angegeben. Die lokalen Klassifikationswahrscheinlichkeiten erhält man hierbei unter Anwendung der zum jeweiligen Objekt gehörenden Eigenschaftsregeln, in denen beispielsweise die Form bzw. Symmetrie, die Farbe oder die Dichte des Gegenstands bzw. Objekts überprüft wird. Je nach Übereinstimmung mit den entsprechenden Eigenschaftsregeln ergibt sich eine lokale Fitness bzw. eine lokale Klassifikationswahrscheinlichkeit, die ein Maß für eine eventuelle Zuordnung des Objekts zu einem bestimmten Gegenstand ist.

Wie vorstehend bereits unter dem Stichwort "Vielfalt" beschrieben wurde, können nicht nur die absolut besten Strukturen überleben, sondern auch zweit- und drittklassige Objekte im Speicher aufbewahrt werden. Die nachfolgende Tabelle zeigt eine derartige Vielfalt von Gegenständen, die beispielsweise dem Objekt 10 zugeordnet werden kann.

Tabelle II:

| Objekt 10 | 75% Augen |
|---|---|
| | 70% Ball |
| | 70% Pupillen |
| | 50% Kopf |

Gemäß der vorstehend beschriebenen Tabelle kann das nahezu kreisförmige Objekt 10 zu 75% als "Auge", zu 70% als "Ball", zu 70% als "Pupillen" und zu 50% als "Kopf" eingestuft bzw. klassifiziert werden. Diese zweit-, dritt- und viertklassifizierten Möglichkeiten des Objekts 10 stellen eine sogenannte Vielfalt dar, die beim iterativen Durchführen des Verfahrens vorerst gespeichert bleibt und eine Erhöhung der Geschwindigkeit des Optimierungsprozesses bei der Objekterzeugung ermöglicht.

In dem dargestellten ersten Ausführungsbeispiel wird jedoch der Einfachheit halber nur mit dem bestmöglichen Gegenstand, d.h. der höchsten Klassifikationswahrscheinlichkeit für die "Augen", weitergearbeitet. Auf der Grundlage der derart ermittelten lokalen Klassifikationswahrscheinlichkeiten werden in einem nachfolgenden Schritt die Beziehungen der jeweiligen Objekte untereinander oder zu untergeordneten bzw. übergeordneten Objekten berücksichtigt, wodurch die lokalen Klassifikationswahrscheinlichkeiten verändert werden und sich fraktale Fitnesswerte bzw. Klassifikationswahrscheinlichkeiten für die jeweiligen Objekte ergeben. In der Tabelle I sind diese globalen Klassifikationswahrscheinlichkeiten in der rechten Spalte angegeben. Die fraktale Klassifikationswahrscheinlichkeit errechnet sich aus den jeweiligen lokalen Klassifikationswahrscheinlichkeiten und den jeweiligen Kontextregeln unter Berücksichtigung der hierarchischen Struktur.

Die so erzeugten Objekte mit jeweiliger fraktaler Klassifikationswahrscheinlichkeit werden anschließend unter Verwendung von Abwandlungsmustern optimiert. Nach wiederholtem Durchführen dieser Schritte erhält man schließlich eine Klassifikationswahrscheinlichkeit für die zu untersuchende Gesamtstruktur, die eine nahezu fehlerfreie und außerordentlich zuverlässige Objekterzeugung bzw. Bilderkennung ermöglicht.

Neben den Eigenschaftsregeln, die anhand der Symmetrie, der Form, der Farbe und der Dichte eines jeweiligen Bereichs die lokale Fitness bzw. Klassifikationswahrscheinlichkeit eines Objekts bestimmen, und den Kontextregeln, die als externe oder interne Kontextregeln über beispielsweise das Größenverhältnis, den Abstand, den Winkel usw. der jeweiligen Objekte zueinander die fraktale Fitness bzw. Klassifikationswahrscheinlichkeit festlegen, können sogenannte Abwandlungsregeln bzw. darwinistische Algorithmen die Ausbreitung bzw. die Abwandlung von bestimmten Objekten gezielt festlegen, wodurch man eine Beschleunigung und erhöhte Fehlerfreiheit des Verfahrens erhält. Bei derartigen Abwandlungsregeln können typische Eigenschaften von Objekten berücksichtigt werden, wie z.B. die Eigenschaft, daß beispielsweise ein Fluß oder eine Straße bei Satellitenaufnahmen üblicherweise einen länglichen bzw. linienhaften Gegenstand darstellen, und somit die Ausbreitungskriterien vorteilhafterweise in Querrichtung und Längsrichtung unterschiedlich gewählt werden.

Beispielsweise werden bei einem Bilderkennungsverfahren isotrope Abwandlungsregeln für flächenhafte Objekte und anisotrope Abwandlungsregeln für linienhafte Objekte eingesetzt.

Das Erzeugen von größeren Objekten kann entweder durch Fusionieren oder durch Gründen erfolgen. Bei der Fusion wird hierbei die objektmäßige Trennung aufgegeben und somit ein einziges neues Objekt gebildet, bei dem die ursprünglichen Objekte miteinander verschmelzen. Es wird hierbei nur ein größeres, aber kein übergeordnetes Objekt gebildet, da die untergeordneten Objekte, also die Fusionspartner, nicht mehr existieren. Demgegenüber bleiben bei der Gründung die ursprünglichen Objekte bestehen, wobei lediglich ein übergeordnetes Objekt als sogenannte Hülle neu hinzukommt. Objekte mit mehr als zwei Unterobjekten werden später durch Fusionen erzeugt. Manchmal kann aber eine Fusion ungeeignet sein, besonders wenn die zu fusionierenden Objekte unterschiedliche Größe besitzen. Dann ist ein Unterordnen des Kleinen zum Größeren möglicherweise eher angebracht, d.h. das kleine Objekt wird zu einem der untergeordneten Objekte des größeren Objekts. In umgekehrter Richtung erfolgt somit eine Zerkleinerung von Objekten relativ einfach, -wenn sich diese aus einer Gründung ergeben, während eventuell eine neue Segmentierung notwendig ist, falls eine Fusion stattgefunden hat. Die Nachteile die sich aus der aufwendigen Zerkleinerung von fusionierten Objekten ergeben, werden durch die Vorteile des geringeren Speicherplatzbedarfs und der schnelleren Verarbeitung wieder aufgewogen.

Gemäß Figur 1 stellt das Bezugszeichen 14 ein unbekanntes Objekt dar. Ein derartiges Objekt kann nachträglich automatisch oder von Hand in die fraktale Objekt-Bibliothek eingetragen und mit jeweiligen Eigenschafts-, Kontext- und oder Abwandlungsregeln versehen werden. Dadurch erweitert sich kontinuierlich der Erfahrungsschatz der fraktalen hierarchischen Objekt-Bibliothek durch neu hinzugefügte Gegenstände, wodurch sich die Genauigkeit für eine zukünftige Objekterzeugung weiter verbessert.

Nachfolgend wird anhand des Objekts 10 die Verbesserung der Klassifikationswahrscheinlichkeit aufgrund der Kontextberücksichtigung im einzelnen beschrieben.

Gemäß Tabelle 1 besitzt das Objekt 10 zunächst lediglich eine lokale Klassifikationswahrscheinlichkeit von 75% für den Gegenstand "Augen". Das Objekt 4 besitzt jedoch eine Klassifikationswahrscheinlichkeit von 80% für den Gegenstand "Ball" und würde sich daher zunächst als Ausgangspunkt für eine weitere Entwicklung des Gesamtobjekts anbieten. Aufgrund der Anwendung der Kontextregeln, wobei beispielsweise ein innerer Zusammenhang (Abstand, Größe) von "Pupille" zu "Augen", "Augen" zu "Nase", "Augen" zu "Mund" usw. berücksichtigt wird, erhöht sich schließlich die fraktale Klassifikationswahrscheinlichkeit für das Objekt 10 auf einen Wert von 85% für den Gegenstand "Augen".

Im vorstehenden Ausführungsbeispiel wurde lediglich die Beziehung von Objekten innerhalb einer Gruppe bzw. einem übergeordneten Objekt (z.B. Kopf) berücksichtigt. Es können aber auch Beziehungen von Objekten berücksichtigt werden, die keiner gemeinsamen Gruppe angehören (z.B. Beziehung zwischen "Auge" und "Ball"). Ferner können mehrere hierarchische Objektstrukturen parallel nebeneinander bestehen, deren Objekte miteinander in Beziehung gebracht werden.

Im vorstehend beschriebenen Ausführungsbeispiel werden 5 insbesondere räumliche Beziehungen, d.h. Abstand, Größe, der Objekte in den Kontextregeln behandelt. Es können aber auch die zeitlichen Beziehungen der Objekte in den Kontextregeln behandelt werden, was insbesondere bei der Spracherkennung bzw. -erzeugung von Bedeutung ist. Schließlich können in den Kontextregeln auch die Beziehungen der absoluten Eigenschaften, z.B. Farbe, der Objekte abgehandelt werden.

Die Figur 2 zeigt eine schematische Darstellung eines zu untersuchenden Satellitenphotos, mit dem die Möglichkeit der Korrektur bei fehlerhafter Objekterzeugung beschrieben wird.

Das Bezugszeichen 15 zeigt hierbei ein linienförmiges Objekt, das sich in einem Abschnitt A kreuzt, in einem Abschnitt B verzweigt bzw. Y-förmig zusammengeführt wird und in einem Abschnitt C von einem weiteren streifenförmigen Objekt überquert wird. Die Bezugszeichen 16 und 17 bezeichnen Keimabschnitte bzw. ausgebildete Grundobjekte.

Nach Anwendung der Eigenschaftsregeln auf die Grundobjekte 16 und 17 ergibt sich beispielsweise beim Objekt 16 aufgrund einen exakten Farbübereinstimmung mit der dazugehörigen Eigenschaftsregel, daß es sich bei diesem Objekt 16 mit 97%iger Klassifikationswahrscheinlichkeit um einen "Fluß" handelt, während das Objekt 17 nur mit 91% Klassifikationswahrscheinlichkeit als "Straße" eingestuft wird. Aufgrund dieser Annahme wird das Objekt 16 gemäß den Abwandlungsregeln für "Flüsse" weiterentwickelt, d.h. daß beispielsweise ein Y-förmiges Zusammentreffen mit anderen Objekten der gleichen Klassifikation "Fluß", beispielsweise im Abschnitt B, die Klassifikationswahrscheinlichkeit des Objekts für "Fluß" weiter erhöht. Auch ein Überqueren durch eine Brücke, wie es in Abschnitt C dargestellt ist, würde folglich in Einklang mit der Abwandlungsregel für Flüsse stehen und somit keine Änderung bei der Weiterentwicklung des Objekts 16 als Gegenstand "Fluß" hervorrufen.

Bei der Entwicklung des Objekts wird jedoch irgendwann das übergeordnete Objekt "Flußsystem" ausgebildet, wonach es durchaus möglich ist, das mehrere Flüsse an einer Stelle in einen Hauptfluß einströmen. Wenn jedoch, wie in Figur 2, Abschnitt A dargestellt ist, die Flußabschnitte nahezu senkrecht aufeinanderstoßen, so widerspricht eine derartige Form einem "Flußsystem". Ein derartiger Widerspruch des erzeugten übergeordneten Objekts in Bezug auf seine Abwandlungsregel (Fluß) kann somit als Korrekturauslöser verwendet werden, wobei ausgehend von dem übergeordneten Objekt (Flußsystem) über die entsprechenden Zwischenobjekte bis hin zum Grundobjekt 16 alle dazugehörigen Klassifikationswahrscheinlichkeiten in der entsprechenden Gruppe um einen bestimmten Betrag, beispielsweise um 10%, verringert werden. Demzufolge besitzt nunmehr das Grundobjekt 16 eine lokale Klassifikationswahrscheinlichkeit von 87% für den Gegenstand "Fluß", während das Grundobjekt 17 in der gleichen Evolutionsstufe noch eine Klassifikationswahrscheinlichkeit von 91% für den Gegenstand "Straße" besitzt. Demzufolge würde nunmehr das gleiche Linienobjekt ausgehend vom Grundobjekt 17 unter Verwendung der Abwandlungsregeln für "Straßen" weiterentwickelt, wobei es auch im Abschnitt A zu keinen Widersprüchen führen würde, da die Wahrscheinlichkeit für Straßenkreuzungen durchaus gegeben ist. Die endgültige Objekterzeugung für das Linienobjekt 15 als "Straße" erhält somit eine erhöhte Klassifikationswahrscheinlichkeit, weshalb dieses Objekt mit höherer Genauigkeit und größerer Zuverlässigkeit erzeugt werden kann.

Insbesondere kann das zu erfassende bzw. zu erzeugende Gesamtobjekt aus mehreren Bildebenen bestehen, die entweder aus geometrischen, sichtbaren oder verborgenen funktionalen Daten von Bildsegmenten bestehen. Für das Ausführungsbeispiel der Satellitenaufnahme versteht man beispielsweise unter sichtbaren funktionellen Daten von Bildsegmenten die einzelnen Farbkanäle, mit denen die Satellitenaufnahme aufgenommen wird, das Höhenprofil, usw. Unsichtbare bzw. verborgene funktionelle Daten von Bildsegmenten können beispielsweise der Grundwasserspiegel, die Bevölkerungsdichte usw. sein.

Wie sich aus dem vorstehend beschriebenen ergibt, können "gleiche" Objekte 15 auf unterschiedliche Art und Weise entwickelt werden. Daraus ergibt sich ein weiterer Vorteil, daß bei entsprechender Modifikation der Abwandlungsregeln die erzeugten Objekte derart von den zu untersuchenden Strukturen abweichen können, daß beispielsweise eine neue Flußform unter dem Gesichtspunkt (Abwandlungsregel) der Überschwemmungssicherheit anstelle des tatsächlich vorliegenden Flusses erzeugt werden kann.

Demzufolge bezieht sich die vorliegende Erfindung nicht nur auf die typischen Anwendungsfälle der Bild- und Spracherkennung, sondern kann auch auf solche Anwendungsgebiete ausgedehnt werden, bei denen beispielsweise neue Bilder unter Verwendung von vorhandenen Bildern und bestimmten Kriterien erzeugt werden sollen oder eventuell der Sinngehalt von Texten oder Sprache erfaßt und in eine andere Sprache umgesetzt und wiedergegeben werden soll. Die typischen Anwendungsgebiete liegen jedoch weiterhin auf der Mustererkennung zur Auswertung von beispielsweise Satellitenbildern oder medizintechnischen Darstellungen, wie beispielsweise Röntgenbildern und Computertomographie.

**Patentansprüche**

1. Computerimplementiertes Verfahren zur mehrskaligen darwinistischen Objekterzeugung aus einer zu untersuchenden Struktur mit den folgenden Schritten:

   **a)** Vorbereiten einer hierarchischen Objekt-Bibliothek mit vorbestimmten Objekten und dazugehörigen Eigenschafts-, Kontext- und Abwandlungsregeln;

   **b)** Erfassen der zu untersuchenden Struktur;

   **c)** Ausbilden von Grundobjekten in der zu untersuchenden Struktur, wobei sich die Grundobjekte in einer hierarchischen Objektstruktur mit unter- und übergeordneten Objekten befinden;

   **d)** Vergleichen der Grundobjekte mit den Objekten der hierarchischen Objekt-Bibliothek, wobei das jeweils ausgebildete Grundobjekt als unbekannt eingestuft wird, wenn in der hierarchischen Objekt-Bibliothek kein entsprechendes Objekt mit den entsprechenden Eigenschaftsregeln vorhanden ist, und dem Grundobjekt mit der Eigenschaftsregel mindestens eine lokale Klassifikationswahrscheinlichkeit zugeordnet wird, wenn in der hierarchischen Objekt-Bibliothek mindestens ein entsprechendes Objekt vorhanden ist;

**e)** Anwenden der Kontextregeln auf die jeweiligen Objekte zum Ausbilden und Berechnen von jeweiligen mehrskaligen Klassifikationswahrscheinlichkeiten;

**f)** Anwenden der Abwandlungsregeln auf die jeweiligen Objekte zum Optimieren der mehrskaligen Klassifikationswahrscheinlichkeiten;

**g)** iteratives Durchführen der Schritte **e)** und **f)** zum schrittweisen Verbessern der mehrskaligen Klassifikationswahrscheinlichkeiten, wobei

die Behandlung und Beschreibung der Objekte für unterund übergeordnete Objekte ähnlich ist.

2. Verfahren nach Anspruch 1, *dadurch gekennzeichnet, daß* die hierarchische Objekt-Bibliothek Prioriätsregeln aufweist, nach denen die zeitliche Reihenfolge und/oder die Häufigkeit für das iterative Durchführen gemäß Schritt **g)** aller Objekte der hierarchischen Objektstruktur festgelegt ist.

3. Verfahren nach Anspruch 1 oder 2, *dadurch gekennzeichnet, daß* der Schritt zum Ausbilden von Grundobjekten aus einer iterativen Segmentierung von Basiselementen unter Berücksichtigung von Homogenitätskriterien besteht.

4. Verfahren nach Anspruch 1 oder 2, *dadurch gekennzeichnet, daß* die hierarchische Objektstruktur erzeugt wird und damit zu einer hierarchischen Abstraktion eines beliebigen vorgegebenen Datensatzes durch Zusammenlegung kleinerer Objekte zu größeren führt, wenn die Anwendung eines Homogenitätskriteriums zu einem Wert unterhalb eines Schwellenwerts führt.

5. Verfahren nach einem der Ansprüche 1 bis *3,dadurch gekennzeichnet, daß* bereits im Schritt **c)** Abwandlungsregeln aus der hierarchischen Objektbibliothek eingesetzt werden.

6. Verfahren nach Anspruch 5, *dadurch gekennzeichnet, daß* bei Bilderkennungsverfahren beim Ausbilden der Grundobjekte isotrope Abwandlungsregeln für flächenhafte Objekte und anisotrope Abwandlungsregeln für linienhafte Objekte eingesetzt werden.

7. Verfahren nach den Ansprüchen 2 bis 6, *dadurch gekennzeichnet, daß* eine hierarchische Objektstruktur der Grundobjekte durch Gründungen zum Erzeugen von übergeordneten Objekten, Zerschlagen zum Erzeugen von untergeordneten Objekten, Fusion zum Erzeugen von größeren Objekten, Auflösung zum Erzeugen von kleineren Objekten, Unterordnung zum Einfangen von untergeordneten Objekten, Ausgruppierung zum Ausstoßen von untergeordneten Objekten und/oder Umgruppierung zum Austauschen von untergeordneten Objekten derart optimiert wird, daß die gewichtete Summe der Varianzen der Klassifizierungswahrscheinlichkeiten aller hierarchischen Objekte minimal wird, wobei jedes Objekt mit der Anzahl seiner untergeordneten Objekte gewichtet wird.

8. Verfahren nach einem der Ansprüche 2 bis 7, *dadurch gekennzeichnet, daß* als Homogenitätskriterium die Differenz der mit der Größe gewichteten Heterogenität h eines durch Fusion oder Gründung neu entstandenen Objekts und der Summe der mit der jeweiligen Größe ($n_1$ bzw. $n_2$) gewichteten Heterogenitäten der ursprünglichen Objekte ($h_1$ bzw. $h_2$) herangezogen wird, die sich aus

$$\Delta h_{gew} = (n_1 + n_2)h_{neu} - (n_1 h_1 + n_2 h_2)$$

ergibt, wobei diese Differenz $\Delta h_{gew}$ der gewichteten Heterogenität nachher zu vorher möglichst klein sein soll.

9. Verfahren nach einem der Ansprüche 2 bis 8, *dadurch gekennzeichnet, daß* von allen potentiell zu einer Fusion oder Gründung in Frage kommenden Objektpaarungen immer diejenigen zuerst zusammengelegt werden, bei denen die durch die Fusion oder Gründung eingetragene Differenz der gewichteten Heterogenität $\Delta h_{gew}$ am geringsten ist.

10. Verfahren nach einem der Ansprüche 2 bis 9, *dadurch gekennzeichnet, daß* dann Objekte bei der Zusammenlegung fusioniert werden, wenn die Differenz der gewichteten Heterogenität geteilt durch die Gesamtgröße $\Delta h_{gew} ./. (n_1 + n_2)$ einen bestimmten vorgegebenen Schwellenwert unterschreitet, oder ein neues übergeordnetes Objekt unter Beibehaltung der kleineren Objekte gegründet wird, wenn diese Differenz oberhalb des Schwellenwerts liegt.

11. Verfahren nach einem der Ansprüche 1 bis 10, *dadurch gekennzeichnet, daß* ein zwischen zwei Objekten potentiell austauschbares untergeordnetes Objekt immer dann tatsächlich umgelagert wird, wenn durch diesen Austausch die gewichtete Heterogenität beider Objekte gemäß der Gleichung

$$h_{gew\ nachher} < h_{gew\ vorher} \Rightarrow$$

$$n_{1nachher}h_{1nachher} + n_{2nachher}h_{2nachher} < n_{1vorher}h_{1vorher} + n_{2vorher}h_{2vorher}$$

verringert wird.

12. Verfahren nach einem der Ansprüche 1 bis 11, *dadurch gekennzeichnet, daß* das unbekannte Objekt zu der hierarchischen Objekt-Bibliothek mit den dazugehörigen Eigenschafts-, Kontext- und/oder Abwandlungsregeln hinzugefügt wird.

13. Verfahren nach einem der Ansprüche 1 bis 12, *dadurch gekennzeichnet, daß* die Eigenschaftsregeln die Eigenschaften eines bestimmten Objekts festlegen.

14. Verfahren nach einem der Ansprüche 1 bis 13, *dadurch gekennzeichnet, daß* die Kontextregeln aus inneren und äußeren Kontextregeln bestehen.

15. Verfahren nach Patentanspruch 14, *dadurch gekennzeichnet, daß* die inneren Kontextregeln eine Beziehung zwischen Objekten festlegen, die in keiner direkten hierarchischen Beziehung miteinander stehen.

16. Verfahren nach Anspruch 14, *dadurch gekennzeichnet, daß* die externen Kontextregeln eine Beziehung zwischen den unter- und übergeordneten Objekten oder von Objekten in parallel angelegten hierarchischen Objektstrukturen festlegen.

17. Verfahren nach einem der Ansprüche 1 bis 16, *dadurch* gekennzeichnet, daß die Objekte nach den in der hierarchischen Objekt-Bibliothek festgelegten Abwandlungsregeln abgewandelt werden.

18. Verfahren nach Anspruch 17, *dadurch gekennzeichnet, daß* die Abwandlungsregeln Optimierungsregeln mit beinhalten.

19. Verfahren nach Anspruch 18, *dadurch gekennzeichnet, daß* die Optimierung im Falle der Bild- bzw. Mustererkennung einer möglichst großen Passung der mehrskaligen Klassifikationswahrscheinlichkeit der Objekte an die hierarchische Objekt-Bibliothek entspricht.

20. Verfahren nach Anspruch 18, *dadurch gekennzeichnet, daß* evolutionäre Methoden zur Optimierung herangezogen werden.

21. Verfahren nach Anspruch 20, *dadurch gekennzeichnet, daß* mehrere hierarchische Objektstrukturen parallel existieren, die sich nach konventionellen genetischen Algorithmen entwickeln.

22. Verfahren nach Anspruch 20, *dadurch gekennzeichnet, daß* entweder die Summe aller mehrskaligen gewichteten Klassifikationswahrscheinlichkeiten des Gesamtobjekts oder nur die mehrskalige Klassifikationswahrscheinlichkeit der Einzelobjekte optimiert wird.

23. Verfahren nach Anspruch 22, **dadurch** *gekennzeichnet, daß* die Wichtung der mehrskaligen Klassifikationswahrscheinlichkeiten entweder mit der Anzahl der untergeordneten Objekte oder mit der Gesamtzahl der kleinsten Objekte, zum Beispiel Pixel, vorgenommen wird.

24. Verfahren nach Anspruch 18, *dadurch gekennzeichnet, daß* ein angestrebter Zustand optimiert wird, der sich auf das Gesamtobjekt oder dessen Teilbereiche bezieht, oder in der hierarchischen Objekt-Bibliothek objektbezogen abgespeichert ist.

**25.** Verfahren nach Anspruch 17 oder 24, *dadurch gekennzeichnet, daß* mehrere Bildebenen existieren, die entweder aus geometrischen, sichtbaren oder verborgenen funktionalen Daten von Bildsegmenten bestehen.

**26.** Verfahren nach einem der Ansprüche 1 bis 25, *dadurch gekennzeichnet, daß* das iterative Durchführen der Verfahrensschritte abgeschlossen wird, wenn die mehrskalige Klassifikationswahrscheinlichkeit für das Gesamtobjekt einen bestimmten Schwellenwert überschritten hat.

**27.** Verfahren nach einem der Ansprüche 1 bis 25, *dadurch gekennzeichnet, daß* das iterative Durchführen der Verfahrensschritte abgeschlossen wird, wenn eine im wesentlichen stabile Gesamtobjekterzeugung erzielt worden ist.

**28.** Verfahren nach einem der Ansprüche 1 bis 27, *dadurch gekennzeichnet, daß* die Objekte n-dimensional sind.

**29.** Verfahren nach Anspruch 28, *dadurch gekennzeichnet, daß* die n-dimensionalen Objekte zweidimensionale Bilder darstellen, die eine zeitliche Struktur beinhalten.

**Claims**

**1.** Computer-operated method of generating a multi-scale Darwinian object from a structure under examination, comprising the following steps:

a) preparing a hierarchical object library with predetermined objects and associated property, context and transformation rules;

b) detecting the structure to be examined;

c) developing basic objects in the structure to be examined, the basic objects being placed in a hierarchical object structure with lower- and higher-ranking objects;

d) comparing the basic objects with the objects of the hierarchical object library, the respective developed object being classified as unknown if no corresponding object with the corresponding property rules is available in the hierarchical object library and at least one local classification probability being assigned to the basic object with the property rule if at least one corresponding object is available in the hierarchical object library;

e) applying the context rules to the respective objects to develop and compute respective multi-scale classification probabilities;

f) applying transformation rules to the respective objects in order to optimise the multi-scale classification probabilities;

g) iterating steps e) and f) in order to improve the multi-scale classification probabilities step by step, wherein

the treatment and description of the objects is similar for subordinate and higher-ranking objects.

**2.** Method as claimed in claim 1, *characterised in that* the hierarchical object library has priority rules, which establish the timing and/or frequency of the iteration outlined in step g) of all objects of the hierarchical object structure.

**3.** Method as claimed in claim 1 or 2, *characterised in that* the step at which basic objects are developed from an iterative segmentation of basic elements takes account of homogeneity criteria.

**4.** Method as claimed in claim 1 or 2, *characterised in that* the hierarchical object structure is generated and duly results in a hierarchical abstraction of any predetermined data-set by integrating smaller objects to form larger ones. if applying a homogeneity criterion produces a value below a threshold value.

**5.** Method as claimed in one of claims 1 to 3, *characterised in that* transformation rules from the hierarchical object library are used as early as step c).

**6.** Method as claimed in claim 5, *characterised in that* isotropic change rules are used for two-dimensional objects and anisotropic change rules for linear objects when developing basic objects as part of an image recognition method.

**7.** Method as claimed in claims 2 to 6, *characterised in that* a hierarchical object structure of the basic objects is optimised by creating to generate higher-ranking objects, breaking down to generate lower-ranking objects, merging to generate larger objects, decomposing to generate smaller objects, subordinating to incorporate subordinate objects, extracting to exclude subordinate objects and/or regrouping to replace subordinate objects so that the weighted sum of the variances of the classification probabilities of all hierarchical objects is minimised, each object being weighted by the number of its subordinated objects.

**8.** Method as claimed in one of claims 2 to 7, *characterised in that*, the homogeneity criterion applied is the difference between the heterogeneity h weighted by the variable of an object newly created by merging or creating and the sum of the heterogeneities of the original objects ($h_1$ or $h_2$) weighted by the respective variable ($n_1$ or $n_2$), resulting from

$$\Delta h_{weighted} = (n_1 + n_2)h_{new} - (n_1 h_1 + n_2 h_2),$$

whereby this difference $\Delta h_{weighted}$ of the weighted heterogeneity is as small as possible afterwards as compared with before.

**9.** Method as claimed in one of claims 2 to 8, *characterised in that* of all object pairs potentially considered for merging or creating, the ones showing the lowest difference in the weighted heterogeneity $\Delta h_{weighted}$ returned when merging or creating are always integrated first.

**10.** Method as claimed in one of claims 2 to 9, *characterised in that* objects are merged during integration if the difference in the weighted heterogeneity divided by the total value $\Delta h_{weighted}$ ./. $(n_1 + n_2)$ falls below a specific predetermined threshold value or, if this difference lies above the threshold value, a new higher-ranking object is created retaining the smaller objects.

**11.** Method as claimed in one of claims 1 to 10, *characterised in that* a subordinate object between two potentially replaceable objects is always re-stored if, as a result of this replacement, the weighted heterogeneity of both objects is reduced in accordance with the equation

$$h_{weighted\ after} < h_{weighted\ before} \Rightarrow$$

$$n_{1after}h_{1after} + n_{2after}h_{2after} < n_{1before}h_{1before} + n_{2before}h_{2before}.$$

**12.** Method as claimed in one of claims 1 to 11, *characterised in that* the unknown object is added to the hierarchical object library with the associated property, context and/or transformation rule.

**13.** Method as claimed in one of claims 1 to 12, *characterised in that* the property rules establish the properties of a specific object.

**14.** Method as claimed in one of claims 1 to 13, *characterised in that* the context rules consist of intrinsic and extrinsic context rules.

**15.** Method as claimed in claim 14, *characterised in that* the intrinsic context rules establish a relationship between objects which are not in a direct hierarchical relationship with one another.

**16.** Method as claimed in claim 14, *characterised in that* the extrinsic context rules establish a relationship between subordinate and higher-ranking objects or objects in parallel-related hierarchical object structures.

**17.** Method as claimed in one of claims 1 to 16, *characterised in that* the objects are modified on the basis of the transformation rules established in the hierarchical object library.

**18.** Method as claimed in claim 17, *characterised in that* the transformation rules incorporate optimisation rules.

**19.** Method as claimed in claim 18, *characterised in that* in the case of image or pattern detection, optimisation is tantamount to obtaining the closest adaptation of the multi-scale classification probability of the objects to the hierarchical object library.

**20.** Method as claimed in claim 18, *characterised in that* evolutionary methods are applied for optimisation purposes.

**21.** Method as claimed in claim 20, *characterised in that* several hierarchical object structures exist in parallel which are developed on the basis of conventional genetic algorithms.

**22.** Method as claimed in claim 20, *characterised in that* either the sum of all multi-scale weighted classification probabilities of the overall object or only the multi-scale classification probability of the individual objects is optimised.

**23.** Method as claimed in claim 22, *characterised in that* the multi-scale classification probabilities are weighted either by the number of subordinate objects or by the total number of the smallest objects, for example pixels.

**24.** Method as claimed in claim 18, *characterised in that* a desired state is optimised which is based on the overall object or its part regions or is stored in the hierarchical object library on an object-specific basis.

**25.** Method as claimed in claim 17 or 24, *characterised in that* several image levels exist which consist either of geometric visible or hidden functional data of image segments.

**26.** Method as claimed in one of claims 1 to 25, *characterised in that* iteration of the method steps is terminated if the multi-scale classification probability for the overall object exceeds a specific threshold value.

**27.** Method as claimed in one of claims 1 to 25, *characterised in that* iteration of the method steps is terminated if a substantially stable overall object has been generated.

**28.** Method as claimed in one of claims 1 to 27, *characterised in that* the objects are n-dimensional.

**29.** Method as claimed in claim 28, *characterised in that* the n-dimensional objects represent two-dimensional images which contain a time structure.


**Revendications**

**1.** Procédé mis en oeuvre sur ordinateur pour la production darwiniste d'objets à plusieurs échelles, à partir d'une structure à examiner, comportant les étapes opératoires suivantes consistant à:

   a) préparer une bibliothèque hiérarchique d'objets comportant des objets prédéterminés et des règles, qui y sont associées, de caractéristiques, de contexte et de modification;
   b) détecter la structure à examiner;
   c) former des objets de base dans la structure à examiner, les objets de base étant situés dans une structure hiérarchique d'objets, comportant des objets de rang inférieur et des objets de rang supérieur;
   d) comparer les objets de base aux objets de la bibliothèque hiérarchique d'objets, l'objet de base respectivement conçu étant classé comme inconnu lorsqu'il n'existe dans la bibliothèque hiérarchique d'objets aucun objet correspondant possédant les règles correspondantes de caractéristiques, et au moins une probabilité locale de classification étant associée à l'objet de base comportant la règle de caractéristiques lorsqu'au moins un objet correspondant est présent dans la bibliothèque hiérarchique d'objets;
   e) appliquer les règles de contexte aux objets respectifs pour former et calculer des probabilités respectives de classification à plusieurs échelles;
   f) appliquer les règles de modification aux objets respectifs pour optimiser les probabilités de classification à plusieurs échelles;
   g) exécuter de façon itérative les étapes e) et f) pour améliorer pas-à-pas les probabilités de classification à plusieurs échelles,

le traitement et la description des objets étant similaires pour des objets de rang inférieur et des objets de rang supérieur.

2. Procédé selon la revendication 1, **caractérisé en ce que** la bibliothèque hiérarchique d'objets comporte des règles de priorité, selon lesquelles la succession dans le temps et/ou la fréquence de l'exécution itérative conformément à l'étape g) de tous les objets de la structure hiérarchique d'objets sont fixées.

3. Procédé selon la revendication 1 ou 2, **caractérisé en ce que** l'étape de conception d'objets de base comprend une segmentation itérative d'éléments de base, qui tient compte de critères d'homogénéité.

4. Procédé selon la revendication 1 ou 2, **caractérisé en ce que** la structure hiérarchique d'objets est produite et conduit par conséquent à une abstraction hiérarchique d'un ensemble quelconque prédéterminé d'objets par rassemblement d'objets plus petits pour former des objets plus grands, lorsque l'utilisation d'un critère d'homogénéité conduit à une valeur inférieure à une valeur de seuil.

5. Procédé selon l'une des revendications 1 à 3, **caractérisé en ce que** déjà lors de l'étape c), les règles de modification tirées de la bibliothèque hiérarchique d'objets sont utilisées.

6. Procédé selon la revendication 5, **caractérisé en ce que** dans le cas du procédé de reconnaissance d'images, lors de la modification des objets de base on utilise des règles isotropes de modification pour des objets présentant une surface et des règles anisotropes de modification pour des objets linéaires.

7. Procédé selon les revendications 2 à 6, **caractérisé en ce qu'**une structure hiérarchique des objets de base est optimisée à l'aide de créations servant à produire des objets de rang supérieur, d'un fractionnement pour produire des objets de rang inférieur, d'une fusion pour produire des objets plus grands, d'une résolution pour produire des objets plus petits, d'une mise à un rang inférieur pour recenser des objets de rang inférieur, d'un groupement pour éliminer des objets de rang inférieur et/ou d'une modification de groupement pour échanger des objets de rang inférieur, de telle sorte que la somme pondérée des modifications des probabilités de classification de tous les objets hiérarchiques devient minimale, chaque objet étant pondéré par le nombre des objets qui sont situés à un rang inférieur à cet objet.

8. Procédé selon l'une des revendications 2 à 7, **caractérisé en ce qu'**on utilise comme critère d'homogénéité la différence de l'hétérogénéité h, pondérée par la taille, d'un objet nouvellement obtenu par fusion ou par création, et la somme des hétérogénéités, pondérées par la grandeur respective $(n_1, n_2)$ des objets initiaux $(h_1$ ou $h_2)$, qui est fournie par

$$\Delta h_{pondérée} = (n_1 + n_2)h_{nouvelle} - (n_1h_1 + n_2h_2)$$

cette différence $\Delta h_{pondérée}$ devant être aussi petite que possible après comme avant.

9. Procédé selon l'une des revendications 2 à 8, **caractérisé en ce que** hormis toutes les paires d'objets intervenant potentiellement pour une fusion ou une création, on rassemble tout d'abord toujours des paires d'objets, pour lesquelles la différence, introduite par la fusion ou la création, de l'hétérogénéité pondérée $\Delta h_{pondérée}$, est la plus faible.

10. Procédé selon l'une des revendications 2 à 9, **caractérisé en ce qu'**on fusionne des objets lors de leur réunion, lorsque la différence des hétérogénéités pondérées, divisée par la grandeur totale $\Delta h_{pondérée}/(n_1 + n_2)$ tombe audessous d'une certaine valeur de seuil prédéterminée, ou on crée un nouvel objet de rang supérieur en conservant les objets plus petits lorsque cette différence est située supérieur à la valeur de seuil.

11. Procédé selon l'une des revendications 1 à 10, **caractérisé en ce qu'**un objet de rang inférieur, pouvant être échangé potentiellement entre deux objets, est décalé de façon effective chaque fois que l'hétérogénéité pondérée des deux objets est réduite, par cet échange, conformément à la relation

$$h_{pondérée, postérieure} < h_{pondérée, antérieure} \Rightarrow$$

$$n_{1\text{postérieure}}h_{1\text{postérieure}} + n_{2\text{postérieure}}h_{2\text{postérieure}} < n_{1\text{précédente}}h_{1\text{précédente}} +$$

$$n_{2\text{précédente}}h_{2\text{précédente}}.$$

12. Procédé selon l'une des revendications 1 à 11, **caractérisé en ce que** l'objet inconnu est ajouté à la bibliothèque hiérarchique d'objets avec les règles, qui y sont associées, de caractéristiques, de contexte et/ou de modification.

13. Procédé selon l'une des revendications 1 à 12, **caractérisé en ce que** les règles de caractéristiques fixent les caractéristiques d'un objet déterminé.

14. Procédé selon l'une des revendications 1 à 13, **caractérisé en ce que** les règles de contexte sont constituées par des règles de contexte intérieures et extérieures.

15. Procédé selon la revendication 14, **caractérisé en ce que** les règles intérieures de contexte fixent une relation entre des objets, qui ne sont liés entre eux par aucune relation hiérarchique directe.

16. Procédé selon la revendication 14, **caractérisé en ce que** les règles extérieures de contexte fixent une relation entre les objets de rang inférieur et les objets de rang supérieur ou entre des objets dans des structures hiérarchiques d'objets, qui sont appliquées en parallèles.

17. Procédé selon l'une des revendications 1 à 16, **caractérisé en ce que** les objets sont modifiés en fonction des règles de modification fixées dans la bibliothèque hiérarchique d'objets.

18. Procédé selon la revendication 17, **caractérisé en ce que** les règles de modification contiennent conjointement des règles d'optimisation.

19. Procédé selon la revendication 18, **caractérisé en ce que** l'optimisation correspond, dans le cas de la reconnaissance d'images ou de modèles, à une adaptation aussi large que possible de la probabilité de classification à échelles multiples des objets à la bibliothèque hiérarchique d'objets.

20. Procédé selon la revendication 18, **caractérisé en ce qu'**on utilise des procédés évolutifs pour l'optimisation.

21. Procédé selon la revendication 20, **caractérisé en ce qu'**il existe en parallèle plusieurs structures hiérarchiques d'objets, qui se développent conformément à des algorithmes génétiques classiques.

22. Procédé selon la revendication 20, **caractérisé en ce que** soit la somme de toutes les probabilités de classification pondérées à plusieurs échelles de l'objet global sont uniquement la probabilité de classification à plusieurs échelles des objets individuels est optimisée.

23. Procédé selon la revendication 22, **caractérisé en ce que** la pondération des probabilités de classification à plusieurs échelles est réalisée soit avec le nombre des objets de rang inférieur, soit avec le nombre total des objets les plus petits, par exemple des pixels.

24. Procédé selon la revendication 18, **caractérisé en ce qu'**on optimise un état recherché, qui concerne l'objet global ou les parties de cet objet ou qu'on le mémorise, d'une manière rapportée à l'objet, dans la bibliothèque hiérarchique d'objets.

25. Procédé selon la revendication 17 ou 24, **caractérisé en ce qu'**il existe plusieurs plans d'image, qui sont constitués par des données fonctionnelles, geométriques, visibles ou masquées, de segments d'images.

26. Procédé selon l'une des revendications 1 à 25, **caractérisé en ce que** l'exécution itérative des étapes opératoires est terminée lorsque la probabilité de classification à plusieurs échelles a dépassé une certaine valeur de seuil, pour l'objet global.

27. Procédé selon l'une des revendications 1 à 25, **caractérisé en ce que** l'exécution itérative des étapes opératoires est terminée lorsqu'une production essentiellement simple de l'objet glcbal a été obtenue.

28. Procédé selon l'une des revendications 1 à 27, **caractérisé en ce que** les objets sont à n dimensions.

29. Procédé selon la revendication 28, **caractérisé en ce que** les objets à n dimensions représentent des images bidimensionnelles, qui contiennent une structure temporelle.

EP 1 025 539 B1

# Fig. 1

# Fig. 2